# FASCICULE DE BREVET EUROPEEN

(11) **EP 1 742 348 B1**
(45) Date de publication et mention de la délivrance du brevet: **16.03.2011**
(21) Numéro de dépôt: 06013540.7
(22) Date de dépôt: 30.06.2006
(51) Int. Cl.: H02P 25/04, H02P 3/18, H02P 1/44

(54) **Procédé de détermination du couple d'un moteur asynchronique et unité électronique pour sa mise en oeuvre**
Einrichtung und Verfahren zur Erfassung des Asynchronmotordrehmoments
Device and method for the determination of the torque supplied by an asynchronous electric motor

(30) Priorité: 07.07.2005 FR 0507257
(43) Date de publication de la demande: 10.01.2007
(73) Titulaire: Somfy SAS, 74300 Cluses (FR)
(72) Inventeur: Tranchand, Alain, 74330 La Balme de Sillingy (FR)
(74) Mandataire: Bugnion Genève

(56) Documents cités:
- EP-A- 1 357 662
- FR-A- 2 770 699
- FR-A- 2 849 300

## Description

L'invention concerne un procédé de détermination du couple d'un moteur asynchrone comprenant un bobinage principal, un bobinage auxiliaire et un condensateur permanent, le moteur étant alimenté par un signal électrique périodique. Elle concerne également une unité de commande de l'alimentation électrique d'un moteur asynchrone pour mettre en oeuvre un tel procédé.

Certains actionneurs destinés à être installés dans les bâtiments et destinés à la manoeuvre d'éléments de fermeture, d'occultation, de protection solaire ou d'écran (tels que par exemple des volets roulants, des portes, des portails ou des stores) comprennent un moteur à induction (ou moteur asynchrone) monophasé à condensateur permanent.

Ces actionneurs sont alimentés par le réseau alternatif, par exemple 230 V 50 Hz. Ils sont munis d'un frein d'immobilisation assurant le blocage de l'actionneur quand le moteur n'est pas alimenté. Ce frein est préférentiellement activé par le flux magnétique du stator du moteur.

Dans de fréquentes applications, l'intensité de la charge que doit entraîner le moteur varie sensiblement au cours du déplacement de l'élément. De plus, la charge est soit entraînante, soit menée au cours du mouvement. Malgré cette grande plage de variation du couple, il est souhaitable qu'une variation faible de la charge puisse être décelée sans ambiguïté, afin de pouvoir reconnaître très rapidement une butée ou un obstacle.

Il est connu de mesurer le couple d'un moteur asynchrone (moteur à induction) monophasé à condensateur de déphasage permanent. Un tel moteur présente un bobinage principal directement alimenté par le réseau alternatif, et un bobinage auxiliaire disposé en série avec le condensateur de déphasage, ces deux éléments étant également alimentés par le réseau alternatif.

Les différents procédés de mesure connus utilisent le fait que la variation de charge entraîne une modification des amplitudes respectives ou des déphasages respectifs de la tension aux bornes du bobinage auxiliaire et de la tension aux bornes du condensateur par rapport à la tension aux bornes du bobinage principal. Alternativement, les amplitudes des courants ou leurs déphasages sont utilisés.

Le brevet FR 2 806 850 donne un exemple de réalisation utilisant l'analyse de l'amplitude de la tension aux bornes du condensateur permanent. Le brevet US 6,215,265 donne un exemple de réalisation utilisant la mesure de déphasage entre les bobinages. La demande de brevet EP 1 357 662 utilise l'analyse de la variation d'amplitude du bobinage auxiliaire. Dans le brevet FR 2 770 699, on utilise des différences ou quotients des différentes tensions, notamment pour s'affranchir de variations éventuelles de la tension du réseau.

On connaît aussi du document FR 2 849 300 un dispositif de commande d'un moteur asynchrone dans lequel on mesure la durée de conduction d'un interrupteur commandé afin de déterminer la valeur du couple moteur. Les variations de consommation électrique de l'unité logique de traitement du dispositif sont de nature à affecter la détermination de cette valeur de couple.

Le but de l'invention est de fournir un procédé de détermination du couple d'un moteur à courant alternatif palliant aux inconvénients précités et présentant des améliorations par rapport aux procédés connus de l'art antérieur. L'invention propose un procédé améliorant la précision intrinsèque de ces procédés, en les rendant également plus robustes vis-à-vis de perturbations sur le réseau.

Le procédé selon l'invention est caractérisé par la partie caractérisante de la revendication 1.

Différents modes d'exécution du procédé selon l'invention sont définis par les revendications dépendantes 2 à 10.

L'unité de commande selon l'invention est définie selon la revendication 11.

Différents modes de réalisation de l'unité de commande selon l'invention sont définis par les revendications dépendantes 11 à 13.

Le dessin annexé représente, à titre d'exemple, des modes de réalisation d'un actionneur selon l'invention et un mode d'exécution d'un procédé de mesure selon l'invention.

La figure 1 est un schéma d'un premier mode de réalisation d'un actionneur selon l'invention.

La figure 2 est un ordinogramme d'un mode d'exécution du procédé de mesure selon l'invention.

Les figures 3 à 5 sont des oscillogrammes des tensions électriques dans un moteur asynchrone pour différentes charges du moteur.

La figure 6 est un schéma d'un moyen d'intégration d'un signal de tension utilisant la charge d'un condensateur.

La figure 7 est un schéma d'un deuxième mode de réalisation d'un actionneur selon l'invention.

La figure 8 représente des oscillogrammes des tensions électriques dans un moteur asynchrone pour différentes charges du moteur.

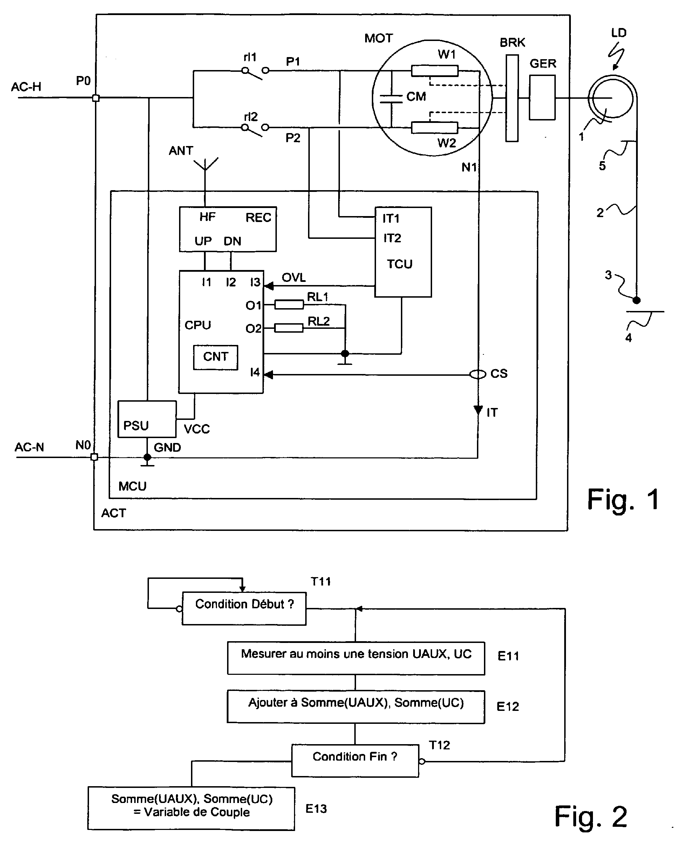

L'actionneur ACT représenté schématiquement à la figure 1 permet d'entraîner un élément mobile LD de fermeture, d'occultation ou de protection solaire ou un écran équipant un bâtiment. Cet élément peut être déplacé selon deux sens opposés par rotation d'un moteur à induction MOT dans un premier sens de rotation et dans un deuxième sens de rotation. L'actionneur est alimenté par le réseau de distribution électrique entre un conducteur de phase AC-H et un conducteur de neutre AC-N. L'élément mobile peut par exemple être un volet roulant comprenant un tablier 2 constitué de lames, enroulable sur un tube d'enroulement 1 et présentant une extrémité inférieure 3 mobile entre une position extrême supérieure 5 et une position extrême inférieure 4.

Le moteur MOT est de type asynchrone, monophasé, à condensateur de déphasage CM permanent. Il comprend deux bobinages W1 et W2. Selon le sens de rotation désiré, le condensateur CM est disposé en série avec le premier bobinage W1 ou avec le deuxième bobinage W2. On désigne par P1 et P2 les points de raccordement du condensateur CM avec chacun des bobinages W1 et W2. Les deux autres extrémités des bobinages sont reliées en un point N1, lui-même raccordé au conducteur neutre AC-N (borne N0) via un capteur de courant CS.

Un frein d'immobilisation BRK est associé au moteur MOT dont il bloque le rotor en absence de courant dans les bobinages. Quand le rotor du moteur MOT tourne, il entraîne un réducteur GER, dont l'étage de sortie entraîne un arbre constituant la sortie mécanique de l'actionneur.

La liaison entre le conducteur de phase AC-H et les bobinages W1 et W2 du moteur sont effectués au moyen de deux interrupteurs rI1 et rI2 commandés par un circuit électronique de pilotage MCU qui comprend divers moyens assurant la commande de l'actionneur, c'est-à-dire des moyens de réception et d'interprétation des ordres reçus, des moyens d'alimentation de l'actionneur et des moyens de coupure de cette alimentation soit par ordre soit lorsqu'une butée est détectée. Les deux interrupteurs rl1 et rl2 ont une connexion commune, reliée au conducteur de phase en une borne de phase P0 de l'actionneur. Les autres connexions des interrupteurs sont respectivement raccordées aux points de raccordement P1 et P2.

Le pilotage des interrupteurs commandés résulte d'ordres de commande transmis par radiofréquences.

Le circuit électronique de pilotage MCU comprend une unité logique de traitement CPU, telle qu'un microcontrôleur. Ce circuit comprend un circuit d'alimentation PSU, typiquement un convertisseur abaisseur, dont une entrée est reliée à la borne de phase P0 et dont l'autre entrée est reliée à la borne de neutre N0 et constitue la masse électrique GND du circuit électronique de pilotage. La tension continue de sortie VCC du circuit d'alimentation alimente l'unité logique de traitement CPU et, de manière non représentée, un récepteur radiofréquences REC.

Ce récepteur radiofréquences REC comprend une entrée HF raccordée à une antenne ANT, et deux sorties logiques UP et DN, respectivement raccordées à deux entrées logiques I1 et I2 de l'unité logique de traitement CPU. Par des moyens connus de l'homme du métier, le récepteur radiofréquences interprète le signal radio reçu pour générer, s'il y a lieu un état logique haut sur la première sortie UP ou un état logique haut sur la deuxième sortie DN, selon que le signal reçu véhicule un ordre de montée ou un ordre de descente.

Selon l'état d'une table d'affectation logée dans la mémoire de l'unité logique de traitement CPU, une activation de la première entrée I1 provoque un ordre de fermeture de l'interrupteur commandé rI1 alors qu'une activation de la deuxième entrée I2 provoque un ordre de fermeture de l'interrupteur commandé rI2.

L'unité logique de traitement comprend une première sortie O1 alimentant une première bobine de relais RL1 et une deuxième sortie O2 alimentant une deuxième bobine de relais RL2. Ces bobines agissent respectivement sur un premier contact de relais constituant l'interrupteur rI1 et sur un deuxième contact de relais constituant l'interrupteur rl2.

Selon la bobine de relais alimentée, le moteur MOT tourne dans l'un ou l'autre sens.

D'autres moyens que des relais sont utilisables, par exemple des triacs ou des transistors.

Le circuit électronique de pilotage MCU comprend une unité de contrôle du couple TCU qui est connectée par deux entrées de mesure IT1 et IT2 aux bornes P1 et P2 du moteur. Ce module de contrôle du couple est par ailleurs raccordé à la masse électrique constituée par la borne commune GND. La tension mesurée sur la première entrée de mesure IT1 est donc référencée par rapport à cette borne commune GND. Il en est de même pour la tension mesurée sur la deuxième entrée de mesure IT2. Ces deux tensions sont respectivement égales à la tension U1 aux bornes du premier bobinage W1 et à la tension U2 aux bornes du deuxième bobinage W2.

L'unité de contrôle du couple TCU, qui est éventuellement alimentée sous la tension VCC par le circuit d'alimentation PSU, délivre en sortie un signal de surcharge de couple OVL raccordé à une entrée I3 de l'unité logique de traitement CPU. Sur la figure, la troisième entrée I3 est de type logique et l'unité de contrôle de couple TCU fait passer à l'état logique haut sa sortie de surcharge OVL si le couple dépasse une valeur prédéterminée et/ou si la variation de couple mesurée dépasse une valeur prédéterminée dans un intervalle de temps donné.

Le dispositif de contrôle de couple TCU peut lui-même être directement intégré dans l'unité logique de traitement.

Alternativement, le dispositif de contrôle de couple TCU peut délivrer une tension analogique sur la sortie de surcharge OVL et la troisième entrée l3 de l'unité logique de traitement CPU peut être de type analogique. Le traitement de l'étude des variations de cette grandeur analogique est alors réalisé dans l'unité logique de traitement CPU.

Une troisième entrée IT3 de l'unité de contrôle de couple TCU est raccordée à la sortie du capteur de courant CS. Ce moyen permet notamment la détection des instants où le courant total IT s'annule.

Alternativement, deux capteurs de courant, non représentés, peuvent être disposés sur chacun des bobinages W1 et W2 et être raccordés à deux entrées de l'unité de contrôle de couple TCU.

Un mode d'exécution du procédé selon l'invention est décrit en référence à la figure 2. Il combine de manière appropriée les effets de déphasage et les effets de variation de tension dus à la variation de charge, sans pour autant nécessiter simultanément des mesures de déphasage et d'amplitude. A cet effet, le procédé réalise une intégration numérique ou analogique :
- soit de la tension aux bornes du bobinage auxiliaire UAUX (selon le sens de rotation la tension UAUX est la tension U2 ou la tension UAUX est la tension U1),
- soit de la tension UC aux bornes du condensateur CM.

Cette intégration a lieu par exemple lors de chaque période de la tension secteur, et débute à un premier instant défini par une première condition particulière, tandis qu'elle se termine à un deuxième instant défini par une deuxième condition particulière. Les conditions particulières sont différentes l'une de l'autre et sont choisies de manière à amplifier la valeur d'intégration grâce aux effets de déphasage dus à la variation de couple.

Dans une première étape de test T11, on teste si une première condition définissant un premier instant de début d'intégration est réalisée. Tant que tel n'est pas le cas, le procédé boucle sur cette étape. La première condition est par exemple l'égalité de la tension auxiliaire UAUX et de la tension principale U1 en valeur absolue, ces tensions étant alors opposées. Ces valeurs sont obtenues respectivement sur les entrées de mesure IT2 et IT1 si le premier bobinage W1 est le bobinage principal. Tant que la première condition n'est pas réalisée, une variable SOMME(UAUX) ou SOMME(UC) est initialisée à zéro.

Dès que la première condition est réalisée, on passe à une étape E11 dans laquelle la tension UAUX et/ou la tension UC est mesurée. De manière préférée, une seule de ces tensions est considérée pour l'ensemble du procédé. S'il s'agit de la tension UC, cette valeur est obtenue par exemple par différence de mesures instantanées faites sur les deux entrées IT1 et IT2. Cette valeur peut être aussi obtenue par mesure directe de la tension entre les deux entrées IT1 et IT2 si l'unité de contrôle de couple TCU le permet.

Dans une étape suivante E12, la tension mesurée UAUX ou UC est ajoutée à la variable SOMME(UAUX) ou SOMME(UC).

Dans une étape de test T12, on vérifie si une deuxième condition définissant un deuxième instant de fin d'intégration est réalisée. La deuxième condition est par exemple le passage à zéro de la tension principale.

Tant que cette condition n'est pas réalisée, le procédé boucle sur l'étape E11 suivie de l'étape E12 : autrement dit, il y a sommation dans le temps de la tension mesurée et la variable SOMME(UAUX) ou SOMME(UC) représente sensiblement une intégrale. Le résultat obtenu par cette sommation n'est pas rigoureusement une intégrale mais s'apparente plutôt à une somme de Riemann. On utilise cependant dans la demande le terme d'intégrale pour désigner une telle somme.

Pour que la précision de la valeur obtenue soit suffisante, il est nécessaire que la fréquence d'échantillonnage de la tension intégrée soit relativement élevée. De préférence, on choisit ainsi une fréquence d'échantillonnage telle que quelle que soit la charge du moteur, les étapes E11 et E12 sont itérées au moins 20 fois.

Dès que la deuxième condition est réalisée, on passe à une étape E13 dans laquelle la valeur de la variable SOMME(UAUX) ou SOMME(UC) est utilisée pour déterminer le couple fourni par le moteur sur la période considérée.

Ce sont les variations de cette variable d'une période à une autre, ou la comparaison de cette variable à un seuil prédéterminé, qui permettent d'établir si le moteur est en surcharge, en sous-charge ou bloqué par un obstacle, et de réagir en conséquence.

Les première et deuxième conditions peuvent être différentes de celles indiquées. En particulier, si c'est la tension auxiliaire qui est intégrée, on peut prendre comme première condition le passage à zéro de cette tension et comme deuxième condition le passage à zéro de la tension principale. On peut aussi prendre comme première condition le passage à zéro de la tension auxiliaire et comme deuxième condition le passage à zéro du courant total IT circulant entre les points N0 et N1 de l'actionneur. Dans une autre variante, on prend des première et deuxième conditions utilisant le courant circulant dans les bobinages principal ou auxiliaire.

De préférence, la durée s'écoulant entre l'instant de début d'intégration et l'instant de fin d'intégration est inférieure à un quart de période de la tension d'alimentation de l'actionneur.

Avantageusement, l'instant de début d'intégration ou l'instant de fin d'intégration peut être déterminé par l'échéance d'une temporisation déclenchée par la réalisation d'un événement. Par exemple, l'instant de début d'intégration de la tension auxiliaire peut être défini par l'échéance d'une temporisation d'un huitième de période (T/8) déclenchée par le passage à zéro de la tension auxiliaire.

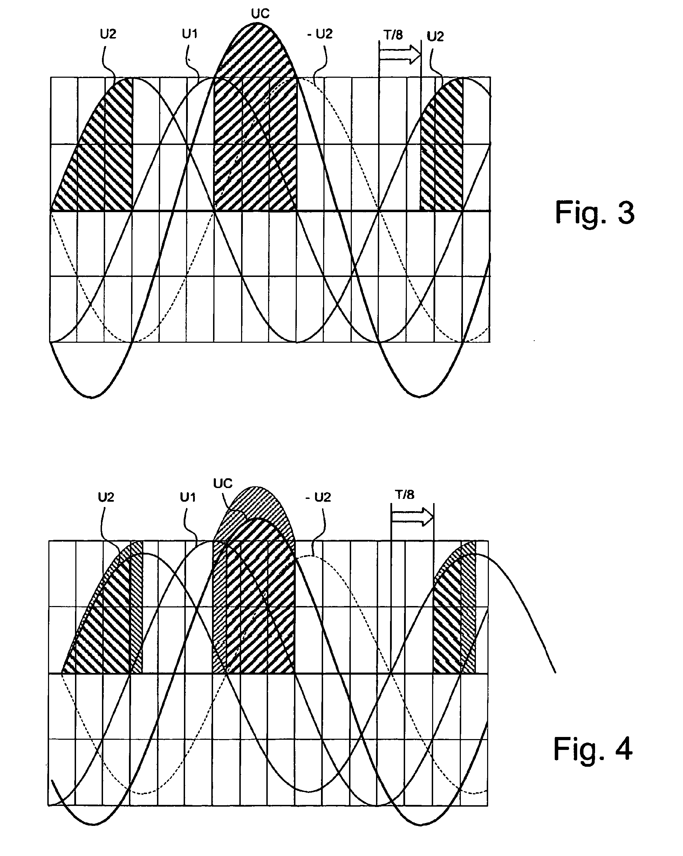

Les figures 3 à 5 illustrent l'intérêt du procédé selon l'invention par rapport aux méthodes conventionnelles de mesure de tension ou de déphasage. Dans chaque cas, la tension U1 est celle du bobinage principal et la tension U2 est celle du bobinage auxiliaire. L'opposé de la tension U2 est également représenté en trait pointillé.

A la figure 3, le moteur est supposé fonctionner dans des conditions nominales. En général, la capacité du condensateur CM est choisie de telle manière que la tension auxiliaire est égale à la tension principale avec un déphasage de 90° au point de fonctionnement nominal.

Si la grandeur intégrée dans le procédé est la tension UC aux bornes du condensateur, une image de l'intégrale est représentée par des hachures épaisses inclinées vers le haut (en se déplaçant de gauche à droite sur les hachures). La première condition est le passage à zéro de la tension U2 et la deuxième condition est le passage à zéro de la tension U1, ces deux passages à zéro ayant lieu par valeur décroissante.

Si la grandeur intégrée dans le procédé est la tension U2 aux bornes du bobinage auxiliaire, une image de l'intégrale est représentée par des hachures épaisses inclinées vers le bas. La première condition est le passage à zéro de la tension U2. La deuxième condition est le passage à zéro de la tension U1.

On constate qu'on a intérêt à prendre une première condition décalée par rapport au passage à zéro de la tension U2, par exemple décalée de T/8 comme représenté par la flèche pleine, T étant la période de la tension alimentant le moteur. Avec un tel choix, on réduit la durée d'intégration et on augmente la variation de la valeur de l'intégrale pour une variation de charge du moteur donnée. Un tel choix de première condition apparaît sur la partie droite de la figure 3.

A la figure 4, le moteur fonctionne en surcharge, ce qui se traduit à la fois par une diminution de la tension auxiliaire et par une réduction de son déphasage avec la tension principale. Les première et deuxième conditions énoncées précédemment sont inchangées. Sur cette figure, on remarque que la valeur de l'intégrale de la tension UC est nettement diminuée par rapport à celle de la figure 3. Une image de la nouvelle valeur d'intégrale est représentée par une surface présentant des hachures épaisses, tandis que la valeur d'intégrale calculée en fonctionnement nominal est représentée en arrière-plan par une surface présentant des hachures fines. Il en est de même si l'on utilise la tension auxiliaire pour l'intégration avec les mêmes première et deuxième conditions définissant les instants de début et de fin d'intégration.

Le choix de la première condition temporisée à partir du passage à zéro de la tension auxiliaire est de nouveau représenté sur la partie droite de la figure 4. On vérifie ici qu'avec un tel choix, on augmente la variation de la valeur de l'intégrale pour une variation de charge du moteur donnée. Une valeur de temporisation supérieure à T/8, par exemple T/6, augmente encore cette variation relative.

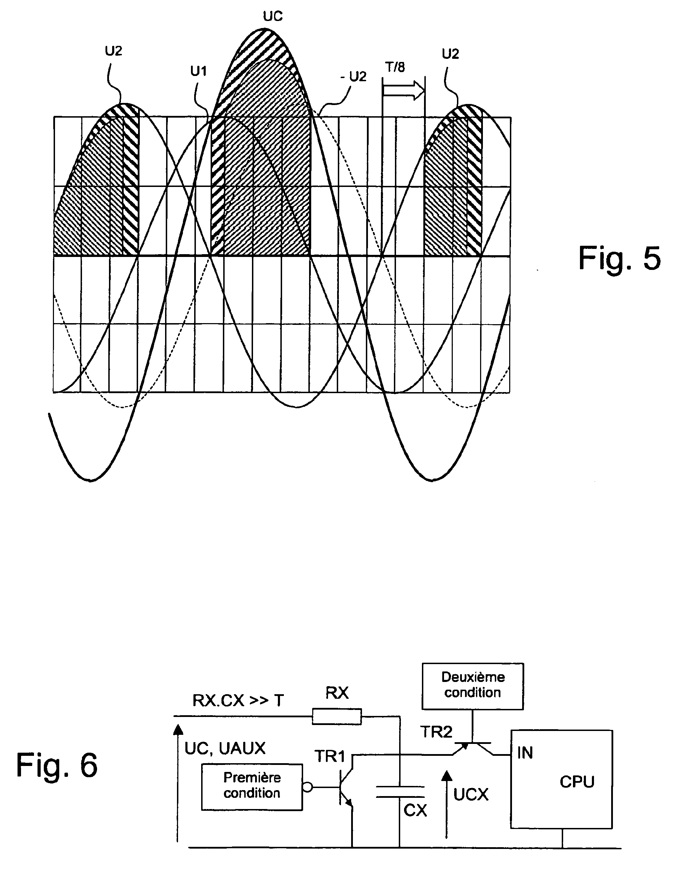

A la figure 5, le moteur fonctionne cette fois en sous-charge, ce qui se traduit à la fois par une augmentation de l'amplitude et du déphasage de la tension auxiliaire U2 par rapport à la tension principale. La nouvelle image de l'intégrale de UC (ou de UAUX) est représentée en arrière-plan par une surface présentant des hachures épaisses, tandis que la valeur d'intégrale calculée en fonctionnement nominal est représentée par une surface présentant des hachures fines.

La dynamique de la variable représentative du couple moteur et constituée par une valeur d'intégrale d'une image d'une tension est donc beaucoup plus importante, comparée à celle des variables utilisées dans les procédés connus de l'art antérieur. De plus, le procédé permet, du fait de l'intégration, de s'affranchir de variations parasites de fréquences élevées apparaissant sur les tensions à intégrer. Il est donc particulièrement robuste.

Les tensions utilisées pour le calcul de l'intégrale sont avantageusement des signaux images de chaque tension, obtenus par exemple à l'aide de montages potentiométriques abaisseurs.

Dans le procédé, l'intégration peut également être réalisée de manière analogique, comme représenté en figure 6, à l'aide d'un condensateur d'intégration CX. Ce condensateur est chargé à travers une résistance RX, dans une première variante, par la tension UC ou par une image de cette tension et, dans une deuxième variante, par la tension UAUX ou par une image de cette tension. La tension UCX aux bornes du condensateur CX représente la valeur de la variable SOMME précédemment décrite. Le condensateur CX est court-circuité par un premier transistor TR1 tant que la première condition n'est pas réalisée tandis qu'un deuxième transistor TR2 devient conducteur et applique la tension UCX à une entrée de mesure IN de l'unité logique de traitement CPU quand la deuxième condition est réalisée. Alternativement, cette entrée analogique peut être directement reliée au condensateur CX, pourvu que la mesure ait lieu au moment où la deuxième condition est activée. Les signaux indiquant l'état des conditions sont par exemple fournis par l'unité de contrôle de couple TCU. Le signal d'état de la deuxième condition peut être appliqué à une entrée logique de l'unité logique de traitement CPU.

L'intérêt d'une intégration analogique est de nécessiter des ressources de calcul beaucoup moins importantes pour l'unité logique de traitement CPU. Les valeurs RX de résistance et CX de capacité sont choisies de manière à ce que la constante de temps RX x CX soit très supérieure à la période de la tension alimentant le moteur. Cette caractéristique est absolument nécessaire pour que l'opération électronique assurée par le montage constitue une intégration analogique et pour assurer une bonne précision de la mesure. En pratique, on choisit RX x CX > 0.2 secondes et de préférence RX x CX > 1 seconde si la période de la tension intégrée est égale à 20 millisecondes. Une forte valeur RX garantit de plus que la mesure ne perturbe pas la valeur de la tension intégrée.

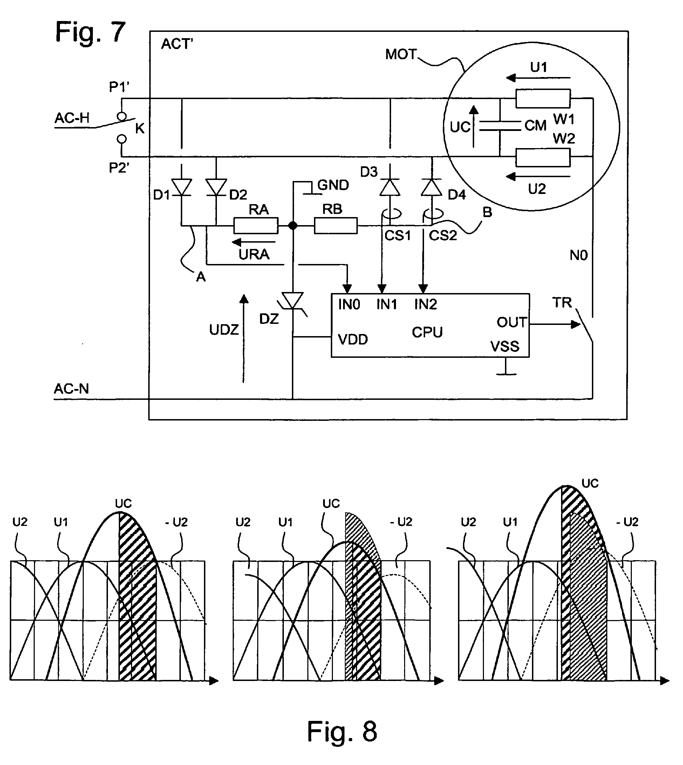

Un deuxième mode de réalisation d'un actionneur ACT' utilisant le procédé de détermination de couple est décrit en référence à la figure 7. Ce mode de réalisation correspond au cas où deux bornes P1' et P2' sont accessibles à l'extérieur de l'actionneur. Selon que le conducteur de phase AC-H est raccordé à la première borne P1 ou à la deuxième borne P2, le moteur tourne dans un premier sens ou dans un deuxième sens.

Un pont de Graetz est utilisé entre les bornes P1' et P2', pour obtenir, aux bornes d'une résistance RA, une tension composite pouvant servir de tension à intégrer. Deux diodes D1 et D2 du pont sont respectivement raccordées à une première extrémité de la résistance RA par leur cathode tandis que leurs anodes sont respectivement raccordées aux bornes P1' et P2' du moteur. Deux autres diodes D3 et D4 du pont sont respectivement raccordées aux bornes P1' et P2' du moteur par leurs cathodes, tandis que leurs anodes sont connectées à une première extrémité d'une résistance RB dont la deuxième extrémité est connectée à la deuxième extrémité de la résistance RA. Le point commun aux résistances RA et RB sert de masse électrique au montage. Il est raccordé à la borne de neutre AC-N par une diode Zener DZ dont la cathode est raccordée au neutre. La tension aux bornes de cette diode Zener est utilisée pour alimenter l'unité logique de traitement CPU'.

Le point commun entre les diodes D1 et D2 et la résistance RA est raccordé à une entrée analogique IN0 de l'unité logique de traitement. Il est ainsi possible de mesurer la tension URA aux bornes de la résistance RA.

Un premier capteur de courant CS1 est disposé au niveau de la diode D3. Sa sortie est raccordée à une première entrée logique IN1 de l'unité logique de traitement. Un deuxième capteur de courant CS2 est disposé au niveau de la diode D4. Sa sortie est raccordée à une première entrée logique IN2 de l'unité logique de traitement. Ainsi, il est possible d'identifier les périodes de conduction des diodes D3 et D4.

Quand l'inverseur de commande K est dans la position représentée sur la figure 7, c'est-à-dire appliquant la phase du secteur AC-H à la borne P1 du moteur, il suffit de surveiller l'état de conduction de D3.

La première condition définissant l'instant T1 de début d'intégration peut correspondre à l'échéance d'une temporisation déclenchée dès que la diode D3 commence à conduire et durant un quart de période de la tension du réseau d'alimentation (T/4).

La deuxième condition définissant l'instant T2 de fin d'intégration est la fin de conduction de la diode D3.

Entre ces deux instants, la tension URA est mesurée et intégrée : elle fournit alors une image de la tension UC aux bornes du condensateur CM.

Quand l'inverseur de commande K est dans la position telle que la phase secteur est appliquée à la borne P2', c'est la conduction de la diode D4 qui est utilisée pour déterminer les instants de début et de fin d'intégration. La mesure et l'intégration se font de nouveau sur la tension URA.

Dans ce mode de réalisation, c'est l'unité logique de traitement qui assure le contrôle du couple, en utilisant les données de mesure. Elle permet la commande d'un interrupteur commandé TR inséré entre le point commun N0 des bobinages et le neutre AC-N. Une sortie OUT de l'unité logique de traitement est raccordée à la borne de commande d'un interrupteur commandé TR, représentée par une flèche.

Alternativement, la tension URA pourrait être utilisée, en remplacement des tensions UC ou UAUX, pour charger un condensateur réalisant une intégration analogique à l'aide d'un montage tel que décrit en référence à la figure 6.

La figure 8 illustre l'intégration de la tension UC lorsque le montage de la figure 7 est utilisé pour détecter une condition de début d'intégration consistant en l'égalité des tensions U1 et -U2 (déduite de l'instant de commutation entre les diodes D4 et D3). La condition de fin d'intégration est le passage à zéro de la tension U1.

Avec les mêmes conditions de charge que celles des figures 3, 4 et 5, la figure 8 représente :
- dans sa partie gauche, en hachures épaisses, une surface représentative de l'intégrale de la tension UC pour une charge nominale du moteur,
- au centre, en hachures épaisses, une surface représentative de l'intégrale de la tension UC pour une surcharge du moteur, (la surface représentative de l'intégrale de la tension UC pour une charge nominale du moteur étant représentée avec des hachures fines en arrière-plan) et
- dans sa partie droite, en hachures épaisses, une surface représentative de l'intégrale de la tension UC pour une sous-charge du moteur, (la surface représentative de l'intégrale de la tension UC pour une charge nominale du moteur étant représentée avec des hachures fines au premier plan).

## Revendications

1. Procédé de détermination du couple d'un moteur asynchrone (MOT) comprenant un bobinage principal (W1), un bobinage auxiliaire (W2) et un condensateur permanent (CM), le moteur étant alimenté par un signal électrique de période T, **caractérisé en ce qu'**il comprend une phase d'intégration numérique ou analogique d'une valeur représentative de la tension aux bornes du bobinage auxiliaire ou aux bornes du condensateur permanent pour établir une variable représentative du couple, l'intégration étant réalisée entre un premier instant défini par une première condition et un deuxième instant défini par une deuxième condition, les conditions étant telles que les premier et deuxième instants sont distincts.

2. Procédé selon la revendication 1, **caractérisé en ce que** l'intervalle de temps séparant le premier instant et le deuxième instant est inférieur ou égal à un quart de période T.

3. Procédé selon l'une des revendications précédentes, **caractérisé en ce qu'**on intègre une image de la tension aux bornes du condensateur permanent.

4. Procédé selon la revendication 3, **caractérisé en ce que** la première condition est:
- soit la tension aux bornes du bobinage auxiliaire s'annule par valeurs décroissantes,
- soit la tension aux bornes du bobinage auxiliaire est égale à l'opposé de la tension aux bornes du bobinage principal.

5. Procédé selon la revendication 3 ou 4, **caractérisé en ce que** la deuxième condition est :
- la tension aux bornes du bobinage principal s'annule par valeurs décroissantes.

6. Procédé selon la revendication 1 ou 2, **caractérisé en ce qu'**on intègre une image de la tension aux bornes du bobinage auxiliaire.

7. Procédé selon la revendication 6, **caractérisé en ce que** la première condition est :
- soit la tension aux bornes du bobinage auxiliaire s'annule par valeurs croissantes,
- soit une temporisation, déclenchée par l'annulation par valeurs croissantes de la tension aux bornes du bobinage auxiliaire, échoit.

8. Procédé selon la revendication 6 ou 7, **caractérisé en ce que** la deuxième condition est :
- la tension aux bornes du bobinage principal s'annule par valeurs croissantes,
- l'intensité du courant d'alimentation du moteur est nulle.

9. Procédé selon l'une des revendications 1 à 8, **caractérisé en ce que** l'intégration est réalisée par la charge d'un condensateur (CX) grâce à une tension image de la tension aux bornes du bobinage auxiliaire (W2) ou aux bornes du condensateur permanent (CM) entre les premier et deuxième instants, la valeur de la tension aux bornes du condensateur (CX) lors du deuxième instant étant la variable représentative du couple.

10. Procédé selon l'une des revendications 1 à 8, **caractérisé en ce que** l'intégration est réalisée par sommation de mesures d'images de tension faites à intervalle défini, l'intervalle étant tel qu'au moins 20 mesures de tension sont sommées quelle que soit la charge du moteur.

11. Unité (MCU) de commande de l'alimentation électrique d'un moteur asynchrone (MOT) à condensateur permanent (CM), **caractérisée en ce qu'**elle comprend des moyens matériels (TCU, CPU, CS, RL1, rl1, RL2, rl2) et logiciels pour mettre en oeuvre le procédé selon l'une des revendications précédentes.

12. Unité (MCU) de commande selon la revendication 11, **caractérisée en ce qu'**elle comprend un circuit série composé d'une résistance (RX) et d'un condensateur (CX) et alimenté par une tension représentative de la tension aux bornes du bobinage auxiliaire (W2) du moteur ou aux bornes du condensateur permanent (CM) du moteur, un premier interrupteur commandé (TR1) branché aux bornes du condensateur (CX) et un deuxième interrupteur commandé (TR2) pour relier une borne du condensateur (CX) à une entrée de mesure (IN) d'une unité logique de traitement (CPU).

13. Unité (MCU) de commande selon la revendication 12, **caractérisée en ce que** le premier interrupteur commandé (TR1), le deuxième interrupteur commandé (TR2) et l'unité logique de traitement (CPU) sont intégrés dans un même circuit microcontrôleur.

## Claims

1. Method for the determination of the torque of an asynchronous motor (MOT) that includes a main winding (W1), an auxiliary winding (W2) and a permanent capacitor (CM), the motor being supplied by an electric signal of the period T, **characterised in that** it comprises a digital or analogue integration phase of a value representative of the voltage at the terminals of the auxiliary winding or at the terminals of the permanent capacitor in order to establish a variable representative of the torque, the integration being realised between a first instant defined by a first condition, and a second instant defined by a second condition, the conditions being such that the first and second instants are different from each other.

2. Method according to claim 1, **characterised in that** the time interval that separates the first instant and the second instant is inferior or equal to a quarter of the period T.

3. Method according to any one of the preceding claims, **characterised in that** an image of the voltage at the terminals of the permanent capacitor is integrated.

4. Method according to claim 3, **characterised in that** the first condition is
- either the voltage at the terminals of the auxiliary winding becomes zero by decreasing values, or
- the voltage at the terminals of the auxiliary winding is equal to the opposite of the voltage at the terminals of the main winding.

5. Method according to claim 3 or 4, **characterised in that** the second condition is
- the voltage at the terminals of the main winding becomes zero by decreasing values.

6. Method according to claim 1 or 2, **characterised in that** an image of the voltage at the terminals of the auxiliary winding is integrated.

7. Method according to claim 6, **characterised in that** the first condition is
- either the voltage at the terminals of the auxiliary winding becomes zero by rising values, or
- a retard, provoked by coming to zero of the voltage at the terminals of the auxiliary winding due to rising values, elapses.

8. Method according to claim 6 or 7, **characterised in that** the second condition is
- the voltage at the terminals of the main winding becomes zero by rising values,
- the intensity of the motor supply current is null.

9. Method according to any one of claims 1 to 8, **characterised in that** the integration is carried out by charging a capacitor (CX) thanks to an image voltage of the voltage at the terminals of the auxiliary winding (W2) or at the terminals of the permanent capacitor (CM) between the first and the second instant, the value of the voltage at the terminals of the capacitor (CX) at the second instant constituting the variable that is representative of the torque.

10. Method according to any one of claims 1 to 8, **characterised in that** the integration is carried out by summing of measures of voltage images taken during the defined interval, this interval being such that at least 20 voltage measures are summed independently on the load of the motor.

11. Unit (MCU) for controlling the electric supply of an asynchronous motor (MOT) with a permanent capacitor (CM), **characterised in that** it comprises hardware means (TCU, CPU, CS, RL1, r11, RL2, rl2) and software means for carrying out the method according to any one of the preceding claims.

12. Control unit (MCU) according to claim 11, **characterised in that** it includes a series circuit composed of a resistor (RX) and a capacitor (CX) and supplied by a voltage that is representative of the voltage at the terminals of the auxiliary winding (W2) of the motor, or at the terminals of the permanent capacitor (CM) of the motor, a first controlled switch (TR1) connected to the terminals of the capacitor (CX), and a second controlled switch (TR2) for connecting a terminal of the capacitor (CX) to a measuring input (IN) of a logical processing unit (CPU).

13. Control unit (MCU) according to claim 12, **characterised in that** the first controlled switch (TR1), the second controlled switch (TR2) and the logical processing unit (CPU) are integrated into one and the same microcontroller circuit.

## Patentansprüche

1. Verfahren zur Erfassung des Drehmoments eines Asynchronmotors (MOT), der eine Hauptwicklung (W1), eine Hilfswicklung (W2) und einen permanenten Kondensator (CM) aufweist und von einem elektrischen Signal der Periode T gespeist wird, **dadurch gekennzeichnet, dass** das Verfahren eine Phase der digitalen oder analogen Integration eines Wertes umfasst, der die Spannung an den Anschlüssen der Hilfswicklung oder des permanenten Kondensators wiedergibt, um eine Variable aufzustellen, welche das Drehmoment wiedergibt, wobei die Integration zwischen einem ersten Zeitpunkt, der durch eine erste Bedingung definiert ist, und einem zweiten Zeitpunkt durchgeführt wird, der durch eine zweite Bedingung definiert ist, und wobei die Bedingungen derart beschaffen sind, dass sich die beiden Zeitpunkte voneinander unterscheiden.

2. Verfahren nach Anspruch 1, **dadurch gekennzeichnet, dass** die Zeitspanne, welche den ersten Zeitpunkt vom zweiten Zeitpunkt trennt, kleiner oder gleich einem Viertel der Periode T ist.

3. Verfahren nach einem der vorstehenden Ansprüche, **dadurch gekennzeichnet, dass** ein Abbild der Spannung an den Anschlüssen des permanenten Kondensators integriert wird.

4. Verfahren nach Anspruch 3, **dadurch gekennzeichnet, dass** die erste Bedingung
- entweder eine Annullierung der Spannung an den Anschlüssen der Hilfswicklung über abnehmende Werte, oder
- die Spannung an den Anschlüssen der Hilfswicklung gleich der entgegengesetzten Spannung an den Anschlüssen der Hauptwicklung
ist.

5. Verfahren nach Anspruch 3 oder 4, **dadurch gekennzeichnet, dass** die zweite Bedingung
- eine Annullierung der Spannung an den Anschlüssen der Hauptwicklung über abnehmende Werte
ist.

6. Verfahren nach Anspruch 1 oder 2, **dadurch gekennzeichnet, dass** ein Abbild der Spannung an den Anschlüssen der Hilfswicklung integriert wird.

7. Verfahren nach Anspruch 6, **dadurch gekennzeichnet, dass** die erste Bedingung
- entweder eine Annullierung der Spannung an den Anschlüssen der Hilfswicklung über steigende Werte
- oder der Ablauf einer Verzögerung, ausgelöst durch die Annullierung der Spannung an den Anschlüssen der Hilfswicklungüber steigende Werte,
ist.

8. Verfahren nach Anspruch 6 oder 7, **dadurch gekennzeichnet, dass** die zweite Bedingung
- eine Annullierung der Spannung an den Anschlüssen der Hauptwicklung über steigende Werte
- oder der Wert Null der Speisestromstärke
ist.

9. Verfahren nach einem der Ansprüche 1 bis 8, **dadurch gekennzeichnet, dass** die Integration durch das Aufladen eines Kondensators (CX) mit Hilfe eines Abbildes der Spannung an den Anschlüssen der Hilfswicklung (W2) oder an den Anschlüssen des permanenten Kondensators (CM) zwischen dem ersten und dem zweiten Zeitpunkt ausgeführt wird, wobei der Wert der Spannung an den Anschlüssen des Kondensators (CX) zum zweiten Zeitpunkt die Variable darstellt, welche für das Drehmoment repräsentativ ist.

10. Verfahren nach einem der Ansprüche 1 bis 8, **dadurch gekennzeichnet, dass** die Integration durch Summieren der Messungen der Spannungsabbilder in der definierten Zeitspanne ausgeführt wird, wobei diese Zeitspanne so gewählt wird, dass mindestens 20 Spannungsmessungen addiert werden, unabhängig von der Belastung des Motors.

11. Steuereinheit (MCU) der elektrischen Speisung eines Asynchronmotors (MOT) mit Permanentkondensator (CM), **dadurch gekennzeichnet, dass** sie Hardwaremittel (TCU, CPU, CS, RL1, r11, RL2, r12) sowie Software zur Ausführung des Verfahrens nach einem der vorstehenden Ansprüche enthält.

12. Steuereinheit (MCU) nach Anspruch 11, **dadurch gekennzeichnet, dass** es sie eine Serienschaltung mit einem Widerstand (RX) und einem Kondensator (CX) aufweist und von einer Spannung gespeist wird, welche für die Spannung an den Anschlüssen der Hilfswicklung (W2) des Motors oder an den Anschlüssen des Permanentkondensator (CM) des Motors repräsentativ ist, und dass sie einen ersten gesteuerten Schalter (TR1) der an den Anschlüssen des Kondensators (CX) anliegt, sowie einen zweiten gesteuerten Schalter (TR2) aufweist, um einen Anschluss des Kondensators (CX) mit einem Messeingang (IN) einer logischen Verarbeitungseinheit (CPBU) zu verbinden.

13. Steuereinheit (MCU) nach Anspruch 12, **dadurch gekennzeichnet, dass** der erste gesteuerte Schalter (TR1), der zweite gesteuerte Schalter (TR2) und die logische Verarbeitungseinheit (CPU) in der gleichen Mikrokontrollerschaltung zusammengefasst sind.
